# EUROPEAN PATENT APPLICATION

(11) **EP 4 693 624 A2**
(43) Date of publication of application: **11.02.2026**
(21) Application number: 25224462.9
(22) Date of filing: 17.12.2025
(51) Int. Cl.: H01M 50/102, H01M 50/184, H01M 50/186, H01M 50/531

(54) **SECONDARY BATTERY AND ELECTRONIC DEVICE**

(30) Priority: 18.12.2024 CN 202411874183
(71) Applicant: Ningde Amperex Technology Limited, Ningde, Fujian 352100 (CN)
(72) Inventor: LI, Chenchen, Ningde City, 352100 (CN)
(74) Representative: Kraus & Lederer PartGmbB

(57) **Abstract**

A secondary battery (100) includes a housing (10), an electrode assembly (20), and a packaging assembly (30), the electrode assembly (20) includes a positive electrode plate (21), a separator (23) and a negative electrode plate (22), an edge of the negative electrode plate (22) is provided with a first groove (22a) and an edge of the separator (23) is provided with a second groove (23a). The first groove (22a) and the second groove (23a) together form a first main groove (20a), an inner wall of the housing (10) is provided with a first isolation member (40) along a groove wall of the first main groove (20a), the first isolation member (40) and the housing (10) close in to form a first sealing cavity (10a), and at least a portion of the packaging assembly (30) is accommodated in the first sealing cavity (10a).

## Description

### TECHNICAL FIELD

This application relates to the technical field of batteries, and in particular, to a secondary battery and an electronic device.

### BACKGROUND

A secondary battery is often accommodated in a cabin of an electronic device. As a power source of the electronic device, the secondary battery is crucial for ensuring the normal operation of the electronic device. The structural design of the secondary battery has a significant impact on the energy density.

### SUMMARY

The applicant found through research that a secondary battery includes a housing, an electrode assembly, and a packaging assembly. The electrode assembly provides power to an electronic device, while the packaging assembly primarily serves to provide support, protection, thermal management, battery management, etc. for the secondary battery. The housing encloses the electrode assembly, and the packaging assembly is typically located outside the housing. Some elements of the packaging assembly require waterproofing, so waterproof structures are required. Due to the limited space in a compartment of the electronic device, disposing waterproof structures requires reducing the volume of the electrode assembly, thereby decreasing the energy density of the secondary battery. As grooves are provided in the electrode assembly and an isolating member is arranged on the housing along the grooves, a waterproof sealing cavity can be formed, and elements of the packaging assembly that require waterproofing can be arranged in the sealing cavity of the housing, which can reduce the need for additional waterproof structures for the elements requiring waterproofing, and increase the volume of the electrode assembly, thereby enhancing the energy density of the secondary battery.

The purpose of this application is to provide a secondary battery and an electronic device, aiming to enhance the energy density of the secondary battery.

According to a first aspect of this application, a secondary battery is provided. The secondary battery includes a housing, an electrode assembly, and a packaging assembly, where the electrode assembly is accommodated in the housing, the packaging assembly is electrically connected to the electrode assembly, the electrode assembly includes a positive electrode plate, a separator, and a negative electrode plate that are sequentially stacked, along a length direction of the electrode assembly, an edge of the negative electrode plate is provided with a negative tab, an edge of the negative electrode plate is provided with a first groove, and an edge of the separator is provided with a second groove. The first groove and the second groove together form a first main groove, an inner wall of the housing is provided with a first isolation member along a groove wall of the first main groove, the first isolation member and the housing close in to form a first sealing cavity, and at least a portion of the packaging assembly is accommodated in the first sealing cavity.

In the above technical solution, since the first groove is provided at the edge of the negative electrode plate, the second groove is provided at the edge of the separator, the first groove and the second groove together form the first main groove, the inner wall of the housing is provided with the first isolation member along the groove wall of the first main groove, the first isolation member and the housing close in to form the waterproof first sealing cavity, and at least a portion of the packaging assembly is accommodated in the first sealing cavity, by placing components of the packaging assembly that require waterproofing in the first sealing cavity, the need for additional waterproof structures for the components requiring waterproofing can be reduced, and the volume of the electrode assembly can be increased, thereby enhancing the energy density of the secondary battery. Additionally, the edge of the negative electrode plate typically extends beyond the positive electrode plate along the length direction of the electrode assembly. By providing the first groove at the edge of the negative electrode plate, the impact on the energy density of the electrode assembly can be reduced.

In some preferred embodiments, along a thickness direction of the electrode assembly, a projection of the first groove at least partially overlaps a projection of the second groove, which can increase the accommodation space of the first sealing cavity.

In some preferred embodiments, along a width direction of the electrode assembly, the negative tab is spaced apart from the first sealing cavity to reduce the possibility of the negative tab affecting part of the packaging assembly in the first sealing cavity.

In some preferred embodiments, along the length direction of the electrode assembly, a width of the first groove is W₁, and 1 mm ≤ W₁ ≤ 3 mm. When W₁ < 1 mm, the space of the first sealing cavity is too small to accommodate some components of the packaging assembly. When W₁ > 3 mm, the electrode assembly may lose more energy density.

In some preferred embodiments, along a width direction of the electrode assembly, a length of the first groove is L₁, and 5 mm ≤ L₁ ≤ 50 mm. When L1 < 5 mm, the space of the first sealing cavity is too small to accommodate some components of the packaging assembly. When L1 > 50 mm, the first sealing cavity may affect the space occupied by a tab, and the electrode assembly may lose more energy density.

In some preferred embodiments, along the length direction of the electrode assembly, an edge of the positive electrode plate is provided with a third groove, and the first groove, the second groove, and the third groove together form the first main groove, which can increase the overlapping area between the positive electrode plate and the negative electrode plate in the thickness direction of the electrode assembly, improve the utilization rate of active materials of the electrode plates, and enhance the energy density.

In some preferred embodiments, along the thickness direction of the electrode assembly, a projection of the third groove at least partially overlaps a projection of the first groove, which can increase the accommodation space of the first sealing cavity.

In some preferred embodiments, along the length direction of the electrode assembly, an edge of the positive electrode plate is provided with a positive tab. The positive tab is spaced apart from the first sealing cavity along the width direction of the electrode assembly, which can reduce the possibility of the positive tab affecting part of the packaging assembly in the first sealing cavity.

In some preferred embodiments, along the width direction of the electrode assembly, both the positive tab and the negative tab are located on a same side of the first sealing cavity, and the positive tab and the negative tab may be centrally gathered on the same side of the first sealing cavity to increase the available space of the first sealing cavity. Alternatively, along the width direction of the electrode assembly, the positive tab and the negative tab are located on opposite sides of the first sealing cavity, respectively, and the positive tab and the negative tab may be centrally gathered on opposite sides of the first sealing cavity, respectively, to increase the available space of the first sealing cavity.

In some preferred embodiment, along the width direction of the electrode assembly, a width of the electrode assembly is W₂, and a length of the first sealing cavity is L₂, where W₂-L₂ ≤ 24 mm, which can increase the available space of the first sealing cavity.

In some preferred embodiments, the packaging assembly includes a first portion and a second portion that are electrically connected, the first portion is accommodated in the first sealing cavity, the second portion is disposed outside the housing, and along the length direction of the electrode assembly, the electrode assembly and the second portion are spaced apart. The first portion may be a component of the packaging assembly that requires waterproofing, while the second portion may be a component of the packaging assembly that does not require waterproofing. By accommodating the first portion in the first sealing cavity, the need for additional waterproof structures in the sealing assembly can be reduced. The electrode assembly and the second portion are spaced apart along the length direction of the electrode assembly, and the second portion may utilize the space occupied by the tab outside the housing, thereby reducing the additional space occupied by the packaging assembly.

In some preferred embodiments, the edge of the negative electrode plate includes a first sub-edge and a second sub-edge, the first sub-edge is provided with the negative tab, the second sub-edge is not provided with the negative tab, the first sub-edge extends beyond the positive electrode plate by a length T₁, and the second sub-edge extends beyond the positive electrode plate by a length T₂, where T₁ > T₂, to reduce the possibility of burrs of the negative tab piercing the separator and coming into contact with the positive electrode plate to cause short circuit; and/or, the edge of the separator includes a third sub-edge and a fourth sub-edge, a projection that is of the third sub-edge and that is along the thickness direction of the electrode assembly at least partially overlaps a projection of the negative tab, a projection that is of the fourth sub-edge and that is along the thickness direction of the electrode assembly does not overlap a projection of the negative tab, the third sub-edge extends beyond the negative electrode plate by a length T₃, and the fourth sub-edge extends beyond the negative electrode plate by a length T₄, where T3 > T4, which can enhance the effect of the separator in blocking the burrs of the negative tab and reduce the possibility that the burrs of the negative tab come into contact with the positive electrode plate to cause short circuit.

In some preferred embodiments, a second sealing cavity is provided in the housing, the first isolation member isolates the first sealing cavity from the second sealing cavity, the secondary battery further includes an electrolyte solution, and the electrolyte solution and the electrode assembly are accommodated in the second sealing cavity, which can reduce the possibility of the electrolyte solution entering the first sealing cavity and affecting the packaging assembly in the first sealing cavity.

In a second aspect, this application further provides an electronic device. The electronic device includes the secondary battery according to any one of the embodiments in the first aspect.

The additional aspects and advantages of the embodiments of this application may be partially described and shown in the subsequent description or illustrated by the implementation of the embodiments of this application.

### BRIEF DESCRIPTION OF DRAWINGS

One or more embodiments are exemplarily illustrated with corresponding drawings. The exemplary description does not constitute any limitation on the embodiments. Components with the same reference numeral in the drawings represent similar components. Unless otherwise specified, the dimensions in the drawings do not constitute any scale limitation.
FIG. 1 is a schematic structural diagram of a secondary battery according to some embodiments of this application;
FIG. 2 is a schematic structural diagram of an electrode assembly according to some embodiments of this application;
FIG. 3 is a schematic structural diagram of an electrode assembly, a positive tab, and a negative tab according to some embodiments of this application;
FIG. 4 is a schematic structural diagram of the electrode assembly, the positive tab, and the negative tab according to some embodiments of this application;
FIG. 5 is a schematic structural diagram of the electrode assembly, the positive tab, and the negative tab according to some embodiments of this application;
FIG. 6 is a schematic structural diagram of the electrode assembly, the positive tab, and the negative tab according to some embodiments of this application;
FIG. 7 is a schematic structural diagram of the electrode assembly, the positive tab, and the negative tab according to some embodiments of this application; and
FIG. 8 is a schematic structural diagram of the electrode assembly, the positive tab, and the negative tab according to some embodiments of this application.

### List of reference numerals:

100. Secondary battery;
10. Housing; 10a. First sealing cavity; 10b. Second sealing cavity;
20. Electrode assembly; 20a. First main groove; 21. Positive electrode plate; 21a. Third groove; 22. Negative electrode plate; 22a. First groove; 221. First sub-edge; 222. Second sub-edge; 23. Separator; 23a. Second groove; 231. Third sub-edge; 232. Fourth sub-edge;
24. Positive tab; 25. Negative tab;
30. Packaging assembly; 31. First portion; 32. Second portion;
40. First isolation member;
X. First direction; Y. Second direction; and Z. Third direction.

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

In this application, reference to "embodiment" means that specific features, structures or characteristics described with reference to the embodiment may be incorporated in at least one embodiment of this application. The occurrence of the phrase at various locations in the description does not necessarily all refer to the same embodiment, nor is it a separate or alternative embodiment that is mutually exclusive with other embodiments.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, "a plurality of" means two or more unless otherwise expressly and specifically defined.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

The term "perpendicular" is used to describe the ideal state between two components. In the actual production or use state, the two components may have an approximately perpendicular state. For example, numerically, the term "perpendicular" may represent an angle of 90±10° between two straight lines, or a dihedral angle of 90±10° between two planes, or an included angle of 90±10° between a straight line and a plane. The two components described as "perpendicular" may not absolutely be straight lines or planes, but may also roughly be straight lines or planes. From a macroscopic point of view, components with the overall extension direction being straight lines or planes may be regarded as "straight lines" or "planes".

A first direction X, a second direction Y, and a third direction Z in this application are bidirectional directions, that is, the first direction X includes the direction indicated by the arrow in the accompanying drawings and its opposite direction, the second direction Y includes the direction indicated by the arrow in the accompanying drawings and its opposite direction, and the third direction Z includes the direction indicated by the arrow in the accompanying drawings and its opposite direction.

The technical features described below in different embodiments of this application may be combined with each other as long as they do not conflict with each other.

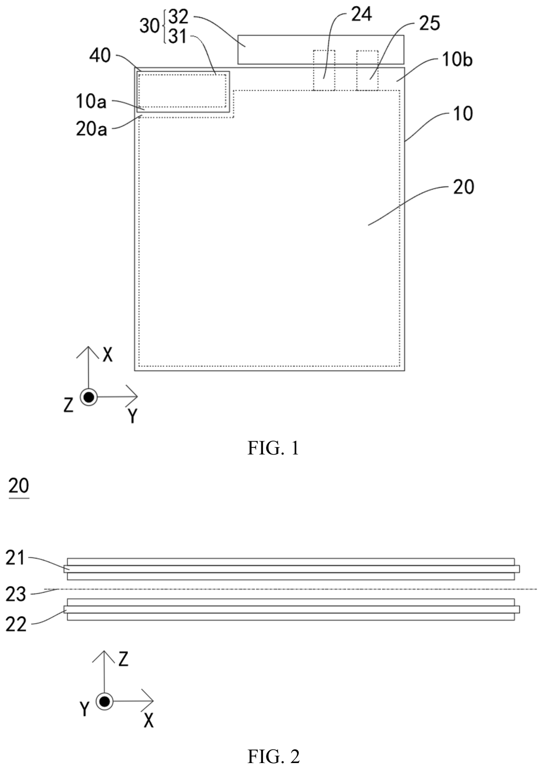

In a first aspect, an embodiment of this application provides a secondary battery 100. Referring to FIG. 1, the secondary battery 100 includes a housing 10 and an electrode assembly 20. The housing 10 can accommodate the electrode assembly 20 and an electrolyte solution (not marked in the figure), and the electrolyte solution infiltrates the electrode assembly 20 within the housing 10.

For the above-mentioned electrode assembly 20, referring to FIG. 2, FIG. 2 illustrates a laminated structure of the electrode assembly 20. The electrode assembly 20 includes a negative electrode plate 22, a positive electrode plate 21, and a separator 23. The positive electrode plates 21 and the negative electrode plates 22 are alternately stacked, with the separator 23 disposed between adjacent positive electrode plate 21 and negative electrode plate 22 to insulate and separate them. In some embodiments of this application, the electrode assembly 20 is described as a laminated structure. In some other embodiments, the electrode assembly 20 may also be of a jelly-roll structure. For example, the positive electrode plate 21, the separator 23, and the negative electrode plate 22 are stacked in sequence and then wound to form the wound electrode assembly 20.

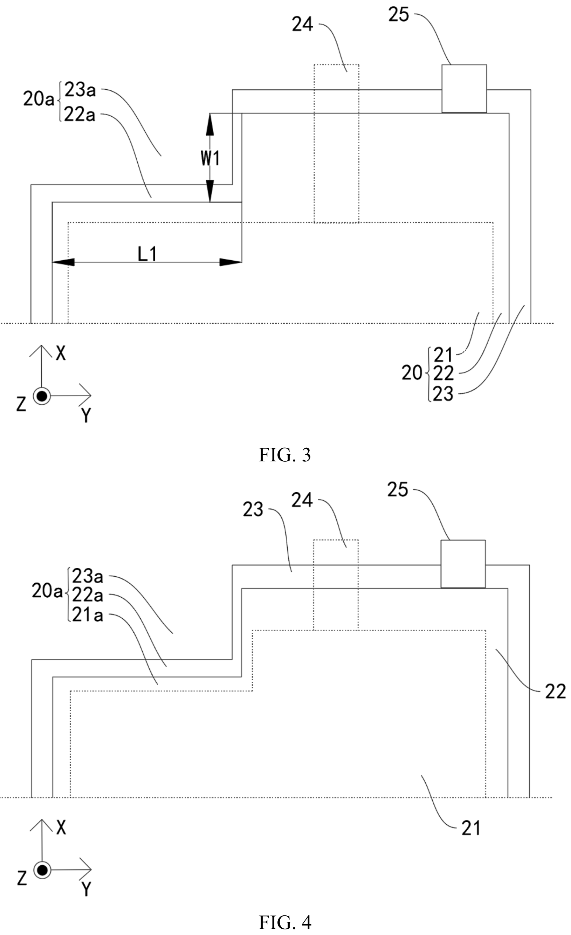

In some embodiments, referring to FIG. 1 and FIG. 3, along a length direction (a first direction X) of the electrode assembly 20, an edge of the negative electrode plate 22 is provided with a negative tab 25, and the negative tab 25 extends out of the housing 10 to assist the negative electrode plate 22 in energy transfer with external electronic devices. Along the length direction of the electrode assembly 20, an edge of the positive electrode plate 21 is provided with a positive tab 24, and the positive tab 24 extends out of the housing 10 to assist the positive electrode plate 21 in energy transfer with external electronic devices.

In some embodiments, referring to FIG. 1, the secondary battery 100 further includes a packaging assembly 30, and the packaging assembly 30 is electrically connected to the electrode assembly 20. The main functions of the packaging assembly 30 are to provide support, protection, thermal management, battery management, etc. for the secondary battery 100. The packaging assembly 30 is typically disposed outside the housing 10. Some components of the packaging assembly 30 require waterproofing, so a waterproof structure is required. The secondary battery 100 is typically accommodated in a compartment of an electronic device. Due to the limited space in the compartment of the electronic device, disposing the waterproof structure requires reducing the volume of the electrode assembly 20, which consequently decreases the energy density of the secondary battery 100.

To alleviate the aforementioned issue, referring to FIG. 1 and FIG. 3, in the embodiment of this application, along the length direction of the electrode assembly 20, an edge of the negative electrode plate 22 is provided with a first groove 22a, and an edge of the separator 23 is provided with a second groove 23a. The first groove 22a and the second groove 23a together form a first main groove 20a. An inner wall of the housing 10 is provided with a first isolation member 40 along a groove wall of the first main groove 20a. The first isolation member 40 and the housing 10 close in to form a first sealing cavity 10a, and at least a portion of the packaging assembly 30 is accommodated in the first sealing cavity 10a. Since the first groove 22a is provided at the edge of the negative electrode plate 22, the second groove 23a is provided at the edge of the separator 23, the first groove 22a and the second groove 23a together form the first main groove 20a, the inner wall of the housing 10 is provided with the first isolation member 40 along the groove wall of the first main groove 20a, the first isolation member 40 and the housing 10 close in to form the waterproof first sealing cavity 10a, and at least a portion of the packaging assembly 30 is accommodated in the first sealing cavity 10a, by placing components of the packaging assembly 30 that require waterproofing in the first sealing cavity 10a, the need for additional waterproof structures for the components requiring waterproofing can be reduced, and the volume of the electrode assembly 20 can be increased, thereby enhancing the energy density of the secondary battery 100. In addition, the edge of the negative electrode plate 22 usually extends beyond the positive electrode plate 21 in the length direction of the electrode assembly 20. By providing the first groove 22a at the edge of the negative electrode plate 22, the impact on the energy density of the electrode assembly 20 can be reduced.

In some embodiments, the first isolation member 40 may be an insulating adhesive, a sealing line, or a welding member, which can enhance the insulating effect of the first isolation member 40 on the packaging assembly 30 in the first sealing cavity 10a, as well as improve the sealing effect of the first isolation member 40 on the first sealing cavity 10a, thereby reducing the possibility of the electrolyte solution entering the first sealing cavity 10a.

In some embodiments, the packaging assembly 30 includes a first portion 31 and a second portion 32 that are electrically connected. The first portion 31 is accommodated in the first sealing cavity 10a, and the second portion 32 is disposed outside the housing 10. Along the length direction of the electrode assembly 20, the electrode assembly 20 and the second portion 32 are spaced apart. The first portion 31 may be a component of the packaging assembly 30 that requires waterproofing, while the second portion 32 may be a component of the packaging assembly 30 that does not require waterproofing. By accommodating the first portion 31 in the first sealing cavity 10a, the need for additional waterproof structures in the sealing assembly 30 can be reduced. The electrode assembly 20 and the second portion 32 are spaced apart along the length direction of the electrode assembly 20, and the second portion 32 may utilize the space occupied by the tab outside the housing 10, thereby reducing the additional space required by the packaging assembly 30. For example, the second portion 32 may be disposed at a tab region of the head of the secondary battery 100, occupying a top-sealing region of the tab.

In some embodiments, the first portion 31, the second portion 32, and the electrode assembly 20 may be connected pairwise via leads. The first portion 31 may include electronic components, a temperature sensor, and a humidity sensor, while the second portion 32 may include an internal holder and a fastener.

In some embodiments, a second sealing cavity 10b is provided inside the housing 10, and the first isolation member 40 isolates the first sealing cavity 10a from the second sealing cavity 10b. The secondary battery 100 further includes an electrolyte solution. The electrolyte solution and the electrode assembly 20 are accommodated in the second sealing cavity 10b, which can reduce the possibility of the electrolyte solution entering the first sealing cavity 10a and affecting the packaging assembly 30 therein.

In some embodiments, along a thickness direction (a third direction Z) of the electrode assembly 20, a projection of the first groove 22a at least partially overlaps a projection of the second groove 23a, which can increase the accommodation space of the first sealing cavity 10a.

In some embodiments, along a width direction (a second direction Y) of the electrode assembly 20, the negative tab 25 is spaced apart from the first sealing cavity 10a to reduce the possibility of the negative tab 25 affecting part of the packaging assembly 30 within the first sealing cavity 10a.

In some embodiments, along the length direction of the electrode assembly 20, a width of the first groove 22a is W₁, where 1 mm ≤ W₁ ≤ 3 mm. When W₁ < 1 mm, the space of the first sealing cavity 10a is too small to accommodate some components of the packaging assembly 30. When W₁> 3 mm, the electrode assembly 20 may lose more energy density.

In some embodiments, along the width direction of the electrode assembly 20, the length of the first groove 22a is L₁, where 5 mm ≤ L₁ ≤ 50 mm. When L₁ < 5 mm, the space of the first sealing cavity 10a is too small to accommodate some components of the packaging assembly 30. When L₁ > 50 mm, the first sealing cavity 10a may affect the space occupied by a tab, and the electrode assembly 20 may lose more energy density.

In some embodiments, referring to FIG. 1 and FIG. 4, along the length direction of the electrode assembly 20, an edge of the positive electrode plate 21 is provided with a third groove 21a. The first groove 22a, the second groove 23a, and the third groove 21a together form the first main groove 20a, which can increase the overlapping area between the positive electrode plate 21 and the negative electrode plate 22 in the thickness direction of the electrode assembly 20, improve the utilization rate of active materials of the electrode plates, and enhance the energy density.

In some embodiments, along the thickness direction of the electrode assembly 20, a projection of the third groove 21a at least partially overlaps a projection of the first groove 22a, which can increase the accommodation space of the first sealing cavity 10a.

In some embodiments, the positive tab 24 is spaced apart from the first sealing cavity 10a along the width direction of the electrode assembly 20, which can reduce the possibility of the positive tab 24 affecting part of the packaging assembly 30 in the first sealing cavity 10a.

In some embodiments, referring to FIG. 3 and FIG. 4, along the width direction of the electrode assembly 20, both the positive tab 24 and the negative tab 25 are located on the same side of the first sealing cavity 10a. The positive tab 24 and the negative tab 25 may be centrally gathered on the same side of the first sealing cavity 10a to increase the available space of the first sealing cavity 10a.

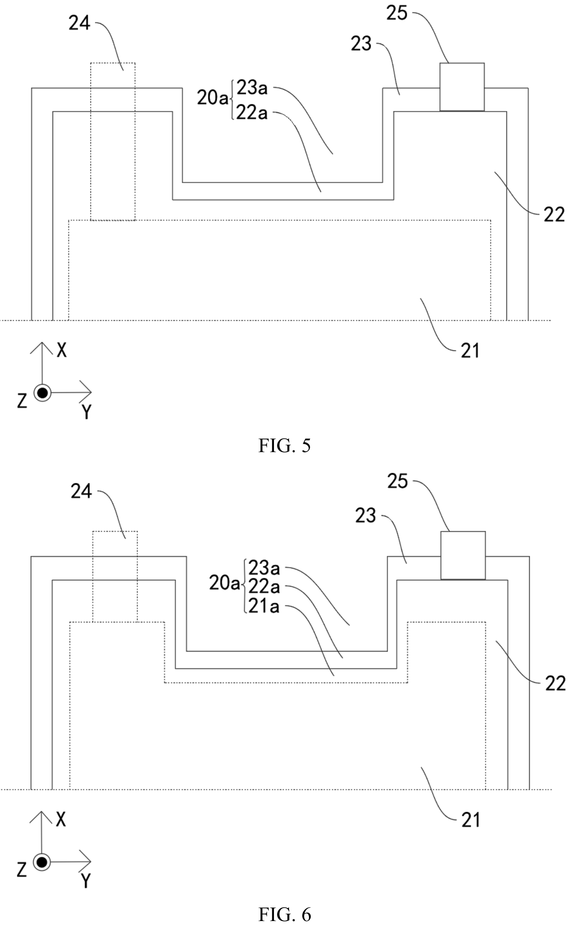

In some embodiments, referring to FIG. 5 and FIG. 6, along the width direction of the electrode assembly 20, the positive tab 24 and the negative tab 25 are located on opposite sides of the first sealing cavity 10a, respectively. The positive tab 24 and the negative tab 25 may be centrally gathered on opposite sides of the first sealing cavity 10a, respectively, to increase the available space of the first sealing cavity 10a. In some embodiments, a symmetry axis of the first groove 22a coincides with a symmetry axis of the second groove 23a to increase the available space of the first sealing cavity 10a. In some embodiments, a symmetry axis of the third groove 21a coincides with the symmetry axis of the first groove 22a to increase the available space of the first sealing cavity 10a.

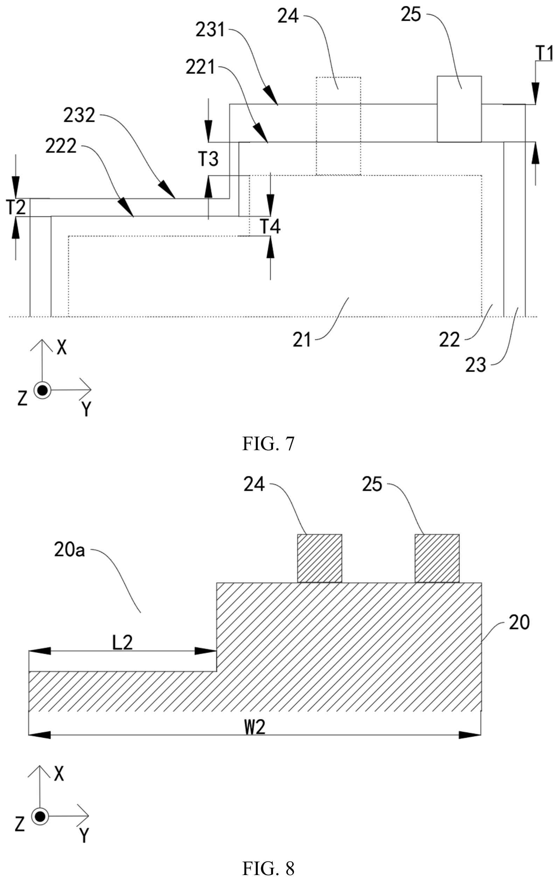

In some embodiments, referring to FIG. 7, the edge of the negative electrode plate 22 includes a first sub-edge 221 and a second sub-edge 222. The first sub-edge 221 is provided with the negative tab 25, and the second sub-edge 222 is not provided with the negative tab 25. The first sub-edge 221 extends beyond the positive electrode plate 21 by a length T₁, and the second sub-edge 222 extends beyond the positive electrode plate 21 by a length T₂, where T₁ > T₂, to reduce the possibility of burrs of the negative tab 25 piercing the separator 23 and coming into contact with the positive electrode plate 21 to cause short circuit.

In some embodiments, the edge of the separator 23 includes a third sub-edge 231 and a fourth sub-edge 232. A projection that is of the third sub-edge 231 and that is along the thickness direction of the electrode assembly 20 at least partially overlaps a projection of the negative tab 25. A projection that is of the fourth sub-edge 232 and that is along the thickness direction of the electrode assembly 20 does not overlap a projection of the negative tab 25. The third sub-edge 231 extends beyond the negative electrode plate 22 by a length T₃, and the fourth sub-edge 232 extends beyond the negative electrode plate 22 by a length T₄, where T₃ > T₄, which can enhance the effect of the separator 23 in blocking the burrs of the negative tab 25 and reduce the possibility that the burrs of the negative tab 25 come into contact with the positive electrode plate 21 to cause short circuit.

In some embodiments, referring to FIG. 8, along the width direction of the electrode assembly 20, a width of the electrode assembly 20 is W₂, and a length of the first sealing cavity 10a is L₂, where W₂-L₂ ≤ 24 mm, which can increase the available space of the first sealing cavity 10a.

A second aspect of this application further provides an electronic device. The electronic device includes the secondary battery 100 according to any embodiment of the first aspect described above. The electronic device in the embodiments of this application is not particularly limited and may be any electronic device known in the prior art. For example, the electronic device includes, but is not limited to, Bluetooth earphones, a mobile phone, a tablet, a notebook computer, an electric toy, an electric tool, an electric power cart, an electric vehicle, a ship, a spacecraft, or the like. The electric toys may include fixed or mobile electric toys, for example, game machines, electric car toys, electric ship toys, electric plane toys and the like, and the spacecraft may include airplanes, rockets, space shuttles and spaceships and the like.

### Test part:

### Embodiment 1

A bare battery cell (electrode assembly) is of a laminated structure, which is formed by sequentially stacking a cathode electrode plate (positive electrode plate), a separator, a anode electrode plate (negative electrode plate), and a separator.

The anode electrode plate is of a special-shaped structure, where an extent that a anode electrode overhang beyond a cathode electrode in the tab region needs to be greater than that in the non-tab region, and an extent that the separator overhang beyond the anode electrode in the tab region also needs to be greater than that in the non-tab region. The reason is that the burrs on the shoulder of the cathode die-cut tab in the tab region can easily pierce the separator and cause short circuit by contacting the anode electrode. And there is no cathode die-cut empty aluminum foil in the non-tab region.

The cathode electrode plate is of a special-shaped structure. Similarly, an extent that the anode electrode overhang beyond the cathode electrode in the tab region needs to be larger than that in the non-tab region. When the positive electrode plate is special-shaped, the recessed space provided by the non-tab region is sufficiently large, which can provide large space for a Pack board (packaging assembly). The size of the recess space depends on the width of an electrode assembly, as the width of the tab region is generally fixed, which is limited by the tab width, and the tab width is constrained by the charge-discharge rate.

The separator is in a conventional square shape and may be thermally bonded to the anode electrode first before stacking with the cathode electrode. After completing the stacking of a single battery cell, a separator in the non-tab region can be made unequal in length to that in the tab region through heat sealing. The reason for heat sealing is to use a heating block of 80-120°C to reach the thermal shrinkage temperature of the separators, causing the separators to shorten and thereby achieving unequal lengths between the separators in the non-tab region and the tab region. This design is for different pocket (housing) lengths for the tab region and the non-tab region.

The pocket is designed with two compartment bodies: the first sealing cavity is a Pack compartment, and the second sealing cavity is a battery compartment. The first isolation member is a sealing line, which operates on a principle similar to a sealing zone, separating the two compartment bodies, i.e., the first sealing cavity/second sealing cavity, to achieve physical isolation.

The first sealing cavity may accommodate components in a Pack board that require waterproofing, such as electronic components, temperature sensors, and humidity sensors, all of which are provided with waterproof structures. Non-waterproof components may be placed outside a battery cell packaging shell, including holders and fasteners, as these components do not require waterproof design.

When there is sufficient space in the non-tab region to accommodate the Pack circuit board, all components of the Pack board may be placed in the first sealing cavity. A battery with Pack installed becomes a special-shaped battery, assembled to a device compartment in an avoidance manner for power supply.

### Embodiment 2

A bare battery cell is of a laminated structure, which is formed by sequentially stacking a positive electrode plate, a separator, a negative electrode plate, and a separator.

The anode electrode plate is of a special-shaped structure, where an extent that a anode electrode overhang beyond a cathode electrode in the tab region needs to be greater than that in the non-tab region, and an extent that the separator overhang beyond the anode electrode in the tab region also needs to be greater than that in the non-tab region. The reason is that during cathode electrode die-cutting in the tab region, the burrs on the tab shoulder can easily pierce the separator and cause short circuit by contacting the anode electrode. And while the non-tab region has no cathode electrode, an empty aluminum foil is die-cut.

The positive electrode plate is of a conventional rectangular structure. Similarly, an extent that the anode electrode overhang beyond the cathode electrode in the tab region needs to be larger than that in the non-tab region. When the electrode plate is in a conventional rectangular shape, the recessed space provided in the non-tab region is relatively limited, only suitable for accommodating some components with higher waterproof priority.

The separator is in a conventional square shape and may be thermally bonded to the anode electrode first before stacking with the cathode electrode. After completing the stacking of a single battery cell, a separator in the non-tab region can be made unequal in length to that in the tab region through heat sealing. The reason for heat sealing is to use a heating block of 80-120°C to reach the thermal shrinkage temperature of the separators, causing the separators to shorten and thereby achieving unequal lengths between the separators in the non-tab region and the tab region. This design is for different pocket lengths for the tab region and the non-tab region.

The pocket is designed with two compartment bodies: the first sealing cavity is a Pack compartment, and the second sealing cavity is a battery compartment. The first isolation member is a sealing line, which operates on a principle similar to a sealing zone, separating the two compartment bodies, i.e., the first sealing cavity/second sealing cavity, to achieve physical isolation.

The first sealing cavity may accommodate components in a Pack board that require waterproofing, such as electronic components, temperature sensors, and humidity sensors, all of which are provided with waterproof structures. Non-waterproof components may be placed outside a battery cell packaging shell, including holders and fasteners, as these components do not require waterproof design.

When space in the non-tab region is insufficient, the temperature sensors, humidity sensors, and electronic elements in the Pack board may be placed in the first sealing cavity, while the holders and fasteners may be placed in a top-sealing area of the tab. Non-waterproof components, if sufficiently large, may be arranged along the entire width direction of the battery. In this case, the battery is a conventional rectangular battery, assembled with a device for power supply.

What is described above is merely some embodiments of this application, and does not thereby limit the patent scope of this application. Equivalent structural or equivalent process variations made by using the content of the description and the accompanying drawings of this application, or the content hereof used directly or indirectly in other related technical fields, similarly fall within the patent protection scope of this application.

## Claims

1. A secondary battery (100), comprising a housing (10), an electrode assembly (20), and a packaging assembly (30); wherein the electrode assembly (20) is accommodated within the housing (10), the packaging assembly (30) is electrically connected to the electrode assembly (20); the electrode assembly (20) comprises a positive electrode plate (21), a separator (23), and a negative electrode plate (22); and along a length direction of the electrode assembly (20), an edge of the negative electrode plate (22) is provided with a negative tab (25);
**characterized in that**, along the length direction of the electrode assembly (20), the edge of the negative electrode plate (22) is provided with a first groove (22a), and an edge of the separator (23) is provided with a second groove (23a); and
the first groove (22a) and the second groove (23a) together form a first main groove (20a), an inner wall of the housing (10) is provided with a first isolation member (40) along a groove wall of the first main groove (20a), the first isolation member (40) and the housing (10) together define a first sealing cavity (10a), and at least a portion of the packaging assembly (30) is accommodated in the first sealing cavity (10a).

2. The secondary battery (100) according to claim 1, **characterized in that** along a thickness direction of the electrode assembly (20), a projection of the first groove (22a) at least partially overlaps a projection of the second groove (23a).

3. The secondary battery (100) according to claim 1 or 2, **characterized in that** along a width direction of the electrode assembly (20), the negative tab (25) is spaced apart from the first sealing cavity (10a).

4. The secondary battery (100) according to any one of claims 1 to 3, **characterized in that** along the length direction of the electrode assembly (20), a width of the first groove (22a) is W₁, and 1 mm ≤ W₁ ≤ 3 mm.

5. The secondary battery (100) according to any one of claims 1 to 4, **characterized in that** along a width direction of the electrode assembly (20), a length of the first groove (22a) is L₁, and 5 mm ≤ L₁ ≤ 50 mm.

6. The secondary battery (100) according to any one of claims 1 to 5, **characterized in that** along the length direction of the electrode assembly (20), an edge of the positive electrode plate (21) is provided with a third groove (21a); and the first groove(22a), the second groove(23a), and the third groove (21a) together form the first main groove (20a).

7. The secondary battery (100) according to claim 6, **characterized in that** along a thickness direction of the electrode assembly (20), a projection of the third groove (21a) at least partially overlaps a projection of the first groove (22a).

8. The secondary battery (100) according to any one of claim 1 to 7, **characterized in that** along the length direction of the electrode assembly (20), an edge of the positive electrode plate (21) is provided with a positive tab (24); and the positive tab (24) is spaced apart from the first sealing cavity (10a) along a width direction of the electrode assembly (20).

9. The secondary battery (100) according to claim 8, **characterized in that** along the width direction of the electrode assembly (20), both the positive tab (24) and the negative tab (25) are located on a same side of the first sealing cavity (10a);
or, along the width direction of the electrode assembly (20), the positive tab (24) and the negative tab (25) are located on opposite sides of the first sealing cavity (10a), respectively.

10. The secondary battery (100) according to any one of claims 1 to 9, **characterized in that** along a width direction of the electrode assembly (20), a width of the electrode assembly (20) is W₂, and a length of the first sealing cavity (10a) is L₂, and W₂ - L₂ ≤ 24 mm.

11. The secondary battery (100) according to any one of claims 1 to 10, **characterized in that** the packaging assembly (30) comprises a first portion (31) and a second portion (32) that are electrically connected, the first portion (31) is accommodated in the first sealing cavity (10a), the second portion (32) is located outside the housing (10); and
along the length direction of the electrode assembly (20), the electrode assembly (20) and the second portion (32) are spaced apart.

12. The secondary battery (100) according to any one of claims 1 to 11, **characterized in that** the edge of the negative electrode plate (22) comprises a first sub-edge (221) and a second sub-edge (222), the first sub-edge (221) is provided with the negative tab(25), the second sub-edge (222) is not provided with the negative tab (25), the first sub-edge (221) extends beyond the positive electrode plate (21) by a length T₁, and the second sub-edge (222) extends beyond the positive electrode plate (21) by a length T₂, wherein T₁ > T_{2 ∘}

13. The secondary battery (100) according to any one of claims 1 to 12, **characterized in that** the edge of the separator (23) comprises a third sub-edge (231) and a fourth sub-edge (232); along the thickness direction of the electrode assembly (20), a projection of the third sub-edge (231) at least partially overlaps a projection of the negative tab (25); along the thickness direction of the electrode assembly (20), a projection of the fourth sub-edge (232) does not overlap a projection of the negative tab (25); the third sub-edge (231) extends beyond the negative electrode plate (22) by a length T₃, and the fourth sub-edge (232) extends beyond the negative electrode plate (22) by a length T₄, wherein T₃ > T₄.

14. The secondary battery (100) according to any one of claims 1 to 11, **characterized in that** a second sealing cavity (10b) is provided in the housing (10), the first isolation member (40) isolates the first sealing cavity (10a) from the second sealing cavity (10b), the secondary battery (100) further comprises an electrolyte solution, and the electrolyte solution and the electrode assembly (20) are accommodated in the second sealing cavity (10b).

15. An electronic device, **characterized in that** the electronic device comprises the secondary battery (100) according to any one of claims 1 to 14.
